# NEUE EUROPÄISCHE PATENTSCHRIFT

(11) **EP 0 720 545 B2**
(45) Veröffentlichungstag und Bekanntmachung des Hinweises auf die Entscheidung über den Einspruch: **18.10.2000**
(45) Hinweis auf die Patenterteilung: 16.04.1997
(21) Anmeldenummer: 94928748.6
(22) Anmeldetag: 29.09.1994
(51) Int. Cl.: B60R 25/04, E05B 49/00

(54) **ELEKTRONISCHES ZÜNDSTARTSCHLOSSSYSTEM AN EINEM KRAFTFAHRZEUG**
ELECTRONIC IGNITION LOCK SYSTEM FOR MOTOR VEHICLES
SYSTèME DE SERRURE ELECTRONIQUE DE CONTACT POUR VEHICULES à MOTEUR

(30) Priorität: 01.10.1993 DE 4333505; 26.11.1993 DE 9320270 U; 12.02.1994 DE 4404497; 12.02.1994 DE 4404498
(43) Veröffentlichungstag der Anmeldung: 10.07.1996
(73) Patentinhaber: Marquardt GmbH, 78604 Rietheim-Weilheim (DE)
(72) Erfinder: MARQUARDT, Jakob, D-78604 Rietheim-Weilheim (DE); MÜLLER, Karl, D-78628 Rottweil-Neufra (DE)
(74) Vertreter: Patentanwälte Eisele, Otten, Roth & Dobler
(86) Internationale Anmeldenummer: DE9401130
(87) Internationale Veröffentlichungsnummer: WO9509748

(56) Entgegenhaltungen:
- EP-A- 0 191 934
- EP-A- 0 266 803
- EP-A- 0 559 159
- DE-A- 3 225 754
- DE-A- 3 306 863
- DE-A- 3 318 415
- DE-A- 3 615 890
- DE-C- 3 314 072
- DE-C- 3 436 761
- FR-A- 2 610 033
- GB-A- 2 169 651
- US-A- 4 856 310
- US-A- 5 086 288

## Beschreibung

Die Erfindung betrifft ein elektronisches Zündstartschloßsystem nach dem Oberbegriff des Patentanspruchs 1.

Derartige Zündstartschloßsysteme - wie in DE-A-3 306 863 beschrieben - werden in Kraftfahrzeugen zur Inbetriebnahme eines zugehörigen Betriebsaggregats eingesetzt.

Aus der DE-A-34 36 761 ist ein Zündstartschloßsystem für ein Kraftfahrzeug bekannt, das aus einem elektronischen Zündschlüssel, einem Zündstartschloß und Verbindungsleitungen zu einem zugehörigen Betriebsaggregat besteht. Im Zündschlüssel sind ein Betriebssignalsender mit Betriebssignalcodierer und im Zündstartschloß ein Betriebssignalempfänger mit Betriebssignaldecodierer angeordnet. Ist der Zündschlüssel in das Zündstartschloß eingeführt, so ist ein codiertes Betriebssignal vom Betriebssignalsender auf den Betriebssignalempfänger übertragbar. Mit Hilfe des Zündschlüssels ist eine Aufnahme im Zündstartschloß drehbar, durch die entsprechend deren Drehstellung einzelne Funktionen des Kraftfahrzeugs einschaltbar sind. In einer bestimmten Drehstellung wird dann nach erfolgreicher Decodierung des Betriebssignals im Betriebssignaldecodierer die Inbetriebnahme des Betriebsaggregats vorgenommen. Durch Rückdrehen des Zündschlüssels erfolgt die Außerbetriebsetzung des Betriebsaggregats.

Es hat sich herausgestellt, daß ein derartiges Zündstartschloßsystem nicht diebstahlsicher ist. Einzelne Funktionen des Kraftfahrzeugs lassen sich durch Drehung des Zündschlüssels im Zündstartschloß auch bei nicht erfolgreicher Decodierung des Betriebssignals einschalten, so daß die Möglichkeit eines Diebstahls des Kraftfahrzeugs zumindestens nicht auszuschließen ist.

Weiter hat es sich herausgestellt, daß ein derartiges Zündstartschloßsystem nicht in allen Fällen betriebssicher ist. Die Außerbetriebsetzung des Betriebsaggregats und das Entnehmen des Zündschlüssels aus dem Zündstartschloß lassen sich unabhängig vom Vorliegen sonstiger Zustände des Kraftfahrzeugs durchführen. So kann die Außerbetriebsetzung beispielsweise bei nicht angezogener Handbremse am Kraftfahrzeug erfolgen. Falls das Kraftfahrzeug ein automatisches Getriebe besitzt, läßt sich die Außerbetriebsetzung auch in anderen Fahrstufen als der Fahrstufe "P" (entspricht "Parken") durchführen. Es ist unmittelbar ersichtlich, daß hieraus erhebliche Gefährdungen der Sicherheit des Benutzers resultieren.

Der Zündschlüssel benötigt zu seiner Funktion eine Energiequelle, die nach einer gewissen Gebrauchsdauer erschöpft sein kann. In einem derartigen Fall ist der Zündschlüssel nicht mehr funktionstüchtig. Eine Inbetriebnahme des Betriebsaggregats kann dann nicht erfolgen.

Der Erfindung liegt die Aufgabe zugrunde, ein Zündstartschloßsystem für ein Kraftfahrzeug mit einer verbesserten Diebstahlsicherheit sowie einer verbesserten Betriebs- und Funktionssicherheit anzugeben.

Diese Aufgabe wird bei einem gattungsgemäßen Zündstartschloßsystem durch die kennzeichnenden Merkmale des Anspruchs 1 gelöst.

Weitere Ausgestaltungen der Erfindung sind Gegenstand der Unteransprüche.

Das Zündstartschloß ist mit einer rotatorisch bewegbaren Aufnahme für den Zündschlüssel ausgestaltet sein. Im Zündstartschloß und im Zündschlüssel können Mittel zur optischen oder induktiven Übertragung von Energie auf den Zündschlüssel zu dessen Betrieb vorgesehen sein. Beispielsweise können die optischen Mittel aus einem Leuchtmittel und einem elektrooptischen Wandlerelement sowie die induktiven Mittel aus einer Induktionsspule und einer elektromagnetischen Übertragungsspule bestehen. Das Zündstartschloßsystem basiert auf einer drahtlosen Übertragung von codierten Betriebssignalen, wobei die Elektronik zu deren Auswertung im Zündstartschloß integriert angeordnet sein kann. Vorteilhafterweise läßt sich für die Betriebssignale eine Übertragung mittels optischer Signale, beispielsweise Infrarot-Signale, oder mittels Hf-Signale verwenden. Auch die Betätigungsmechanik für ein Lenkradschloß kann im Zündstartschloß integriert sein.

Die Bewegung des Zündschlüssels im Zündstartschloß läßt sich gemäß einer weiteren Ausbildung in zwei Stellungen mittels einer elektromagnetischen Sperreinrichtung verriegeln, wobei die Entriegelung erst bei Vorliegen weiterer Schaltsignale, beispielsweise das Signal "Handbremse betätigt" usw., vorgenommen wird. Die elektromagnetische Sperreinrichtung besteht aus einem Elektromagneten mit Sperrwippe, wobei im Magnetkreis ein weiterer Haftmagnet mit Permanenterregung angeordnet sein kann, so daß vorteilhafterweise auch bei einem Spannungsausfall während des Betriebs die Verriegelung aktiv bleibt.

Die mit der Erfindung erzielten Vorteile bestehen insbesondere darin, daß eine weitere Verbesserung der Diebstahlsicherheit erreicht wird. Wird ein nicht berechtigter Zündschlüssel verwendet, so ist weder eine Inbetriebnahme des Betriebsaggregats noch ein Einschalten sonstiger Funktionen am Kraftfahrzeug möglich.

Weiter wird auch eine Verbesserung der Betriebssicherheit erzielt. Die Außerbetriebnahme des Betriebsaggregats und eine Entnahme des Zündschlüssels aus dem Zündstartschloß ist nur möglich, wenn die Sicherheitsanforderungen am Kraftfahrzeug durch den Benutzer erfüllt sind, also beispielsweise die Handbremse angezogen und die Fahrstufe "P" eingelegt ist. Umgekehrt kann auch die Inbetriebnahme des Betriebsaggregats auf dieselbe Weise von der Erfüllung bestimmter Sicherheitsanforderungen abhängig sein.

Der Zündschlüssel ist weitgehend wartungsfrei. Die Energieversorgung des Zündschlüssels kann im Zündstartschloß erfolgen, so daß der Zündschlüssel völlig ohne Energiespeicher bei gleicher Sicherheit für die Inbetriebnahme des Betriebsaggregats auskommen kann. Selbst wenn für weitere Funktionen, beispielsweise die Fernbedienung der Zentralverriegelung am Kraftfahrzeug, der Zündschlüssel einen Energiespeicher besitzt, kann bei an sich erschöpftem Energiespeicher noch ein bestimmungsgemäßer Gebrauch des Zündschlüssels erfolgen.

Das Zündstartschloß läßt sich mechanisch sehr einfach ausgestalten, so daß das erfindungsgemäße Zündstartschloßsystem bei gesteigerter Betriebs- und Diebstahlsicherheit mit deutlichen geringeren Kosten gegenüber herkömmlichen mechanischen Zündstartschloßsystemen herstellbar ist.

Ausführungsbeispiele der Erfindung sind in den Zeichnungen dargestellt und werden im folgenden näher beschrieben. Es zeigen
- Fig. 1: schematisch eine Funktionsübersicht des Zündstartschloßsystems
- Fig. 2: ein Blockschaltbild für die Elektronik des Zündstartschloßsystems,
- Fig. 3: einen Längsschnitt durch einen Zündschlüssel,
- Fig. 4: einen Längsschnitt durch ein Zündstartschloß,
- Fig. 5a: einen Schnitt entlang der Linie 5-5 in Fig. 4,
- Fig. 5b: einen Schnitt entlang der Linie 5-5 in Fig. 4 gemäß einer weiteren Ausführung,
- Fig. 6: einen Schnitt entlang der Linie 6-6 in Fig. 4,
- Fig. 7: einen Schnitt entlang der Linie 7-7 in Fig. 4 und
- Fig. 8: ein prinzipielles Blockschaltbild für die Elektronik des Zündstartschloßsystems in einer weiteren Ausführung.

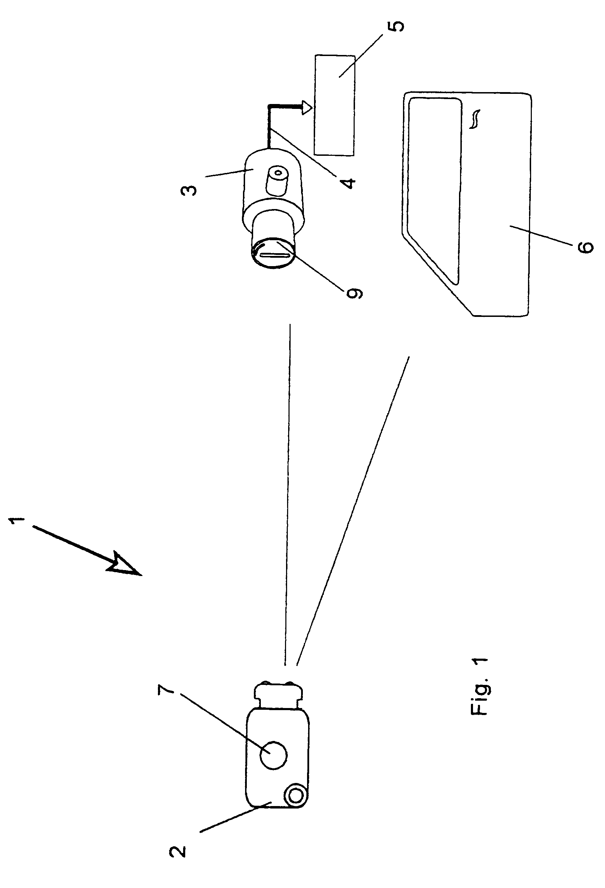

Das in Fig. 1 gezeigte Zündstartschloßsystem 1 ist für ein Kraftfahrzeug bestimmt und besteht aus einem elektronischen Zündschlüssel 2 und einem elektronischen Zündstartschloß 3 zur Betätigung eines zugehörigen Betriebsaggregats 5. Beim Betriebsaggregat 5 kann es sich beispielsweise um die Motorelektronik des Kraftfahrzeugs, eine elektronische Wegfahrsperre o. dgl. handeln. Das Betriebsaggregat 5 steht über Leitungen 4 mit dem Zündstartschloß 3 in Verbindung, so daß das Betriebsaggregat 5 durch entsprechende Signale vom Zündstartschloß 3 in Betrieb genommen werden kann.

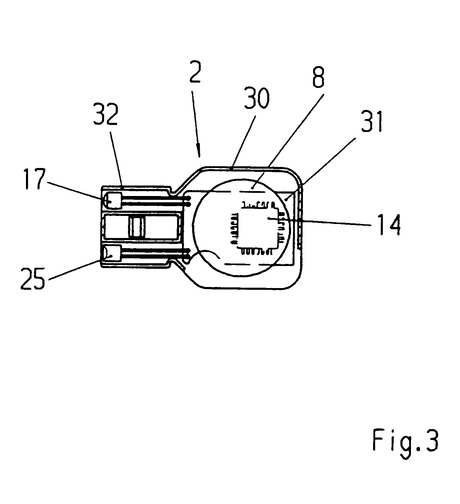

Zusätzlich läßt sich der Zündschlüssel 2 für weitere Funktionen verwenden. Vorliegend dient dieser noch zur Betätigung der Fernbedienung der Zentralverriegelung der Türen 6 des Kraftfahrzeugs. Bei Betätigung einer Taste 7 am Zündschlüssel 2 wird ein entsprechendes codiertes Signal gesendet, das wiederum von einem Steuergerät am Kraftfahrzeug empfangen und ausgewertet wird. Ist der Code in Ordnung bewirkt das Steuergerät eine Ver- oder Entriegelung der Türen 6. Zur Energieversorgung des Senders für die Fernbedienung besitzt der Zündschlüssel 2 einen in Fig. 3 gezeigten Energiespeicher 8, beispielsweise eine Batterie.

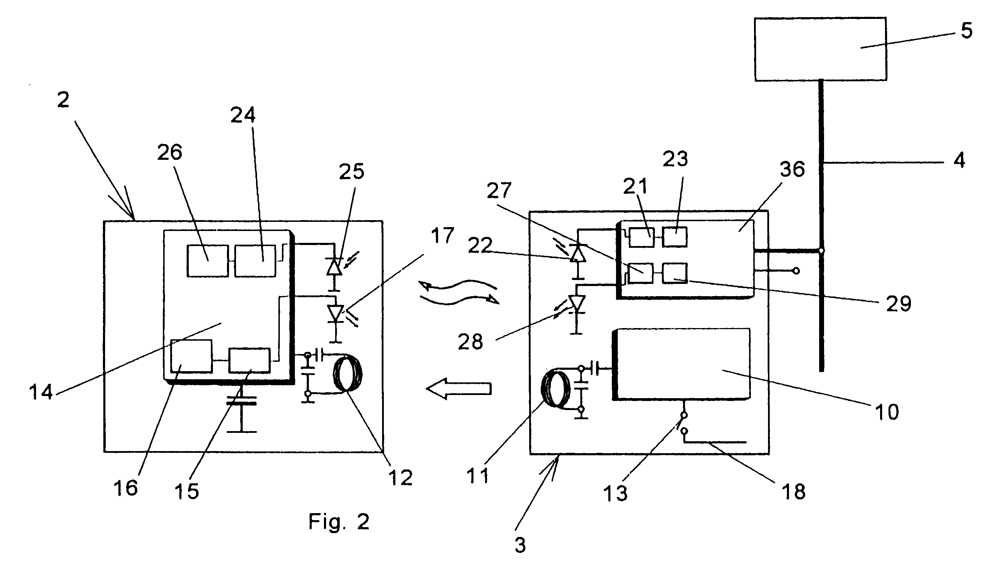

Das Zündstartschloß 3 besitzt eine Aufnahme 9, in die der Zündschlüssel 2 zur Inbetriebnahme des Betriebsaggregats 5 einführbar ist. Im Zündstartschloß 3 tauscht der Zündschlüssel 2 mit dem Zündstartschloß 3 wenigstens ein codiertes Betriebssignal aus. Vorzugsweise werden zwei Betriebssignale bidirektional übertragen, wobei Mittel für Übertragung und Auswertung der Betriebssignale im Zündstartschloß 3 und im Zündschlüssel 2 integriert sind. Eine Ausgestaltung dieser Mittel ist in einer ersten Ausführungsform als Blockschaltbild in Fig. 2 näher gezeigt.

Der Zündschlüssel 2 besitzt eine aus einer integrierten Schaltung bestehende Schlüsselelektronik 14. Ist der Zündschlüssel 2 in die Aufnahme 9 des Zündstartschlosses 3 eingeführt, so wird ein Schalter 13 betätigt. Dadurch wird eine induktive Energieübertragung vom Zündstartschloß 3 auf den Zündschlüssel 2 eingeschaltet, so daß die für den Betrieb der Schlüsselelektronik 14 benötigte Energie vom Zündstartschloß 3 geliefert wird. Dazu befindet sich im Zündstartschloß 3 eine mit der Bordnetz-Zuleitung 18 in Verbindung stehende Energieübertragungs-Elektronik 10, die wiederum eine Induktionsspule 11 speist. Im Zündschlüssel 2 ist eine korrespondierende elektromagnetische Übertragungsspule 12 angeordnet, die die induktiv übertragene Energie aufnimmt und der Schlüsselelektronik 14 zur Spannungsversorgung zuleitet. Es ist somit hervorzuheben, daß die Energieversorgung der Schlüsselelektronik 14 hierdurch unabhängig vom Energiespeicher 8 ist. Selbstverständlich ist anstelle einer induktiven Energieübertragung auch eine optische Energieübertragung möglich, indem die Energieübertragungs-Elektronik 10 ein optisches Element, das Licht emittiert, beispielsweise eine Leuchtdiode, speist und im Zündschlüssel (2) ein dazu korrespondierendes optoelektronisches Wandlerelement, wie eine Photodiode oder ein Phototransistor, angeordnet ist.

Die Schlüsselelektronik 14 enthält einen ersten Betriebssignalsender 15, der als optischer Sender, beispielsweise mit einer Infrarot-Sendediode 17 arbeitend, ausgebildet sein kann. Weiter enthält die Schlüsselelektronik 14 einen ersten Betriebssignalcodierer 16, der wiederum mit dem ersten Betriebssignalsender 15 in Verbindung steht. Das Zündstartschloß 3 besitzt einen ersten, als optischen Empfänger ausgebildeten Betriebssignalempfänger 21, beispielsweise einen Infrarotempfänger mit zugehöriger Infrarot-Empfangsdiode 22 und einen mit dem ersten Betriebssignalempfänger 21 in Verbindung stehenden ersten Betriebssignaldecodierer 23. Dadurch ist im ersten Betriebssignalcodierer 16 ein erstes codiertes Betriebssignal erzeugbar und vom ersten Betriebssignalsender 15 des Zündschlüssels 2 auf den ersten Betriebssignalempfänger 21 im Zündstartschloß 3 übertragbar. Im Betriebssignaldecodierer 23 wird das codierte erste Betriebssignal entschlüsselt und ausgewertet, wobei nach positiver Auswertung, d.h. es handelt sich um den richtigen Zündschlüssel, die Inbetriebnahme des Betriebsaggregats 5 durch das Zündstartschloß 3 ermöglicht wird, wie nachfolgend noch näher erläutert wird.

In Weiterbildung des Zündstartschloßsystems 1 können nun jeweils ein zweiter, als optischer Empfänger mit zugehöriger Infrarot-Empfangsdiode 25 ausgebildeter Betriebssignalempfänger 24 sowie damit verbundenem zweiten Betriebssignaldecodierer 26 im Zündschlüssel 2 und ein zweiter, als optischer Sender mit zugehöriger Infrarot-Sendediode 28 ausgebildeter Betriebssignalsender 27 sowie damit verbundenem zweiten Betriebssignalcodierer 29 im Zündstartschloß 3 angeordnet sein. Dadurch ist wiederum ein zweites codiertes Betriebssignal vom zweiten Betriebssignalsender 27 im Zündstartschloß 3 auf den zweiten Betriebssignalempfänger 24 im Zündschlüssel 2 übertragbar. Zur Ermöglichung der Inbetriebnahme des Betriebsaggregats 5 kann dann das zweite Betriebssignal mit dem ersten Betriebssignal in einer bidirektionalen Kommunikation zusammenwirken, d.h. es ist ein positive Auswertung sowohl des ersten als auch des zweiten Betriebssignals notwendig. Damit wird eine noch weiter verbesserte Diebstahlsicherheit erzielt.

Wie man weiter anhand Fig. 3 sieht, besitzt der Zündschlüssel 2 ein Gehäuse 30, dessen hinterer Teil eine Leiterplatte 31 enthält. Auf der Leiterplatte 31 befindet sich die als integrierte Schaltung ausgebildete Schlüsselelektronik 14. Der vordere Teil des Gehäuses 30 ist als eine Art Stecker 32 zum Einführen in die Aufnahme 9 des Zündstartschlosses 3 ausgestaltet und enthält Öffnungen, in denen die Infrarot-Sendediode 17 des ersten Betriebssignalsenders 15 und die Infrarot-Empfangsdiode 25 des zweiten Betriebssignalempfängers 24 mit Verbindung zur Leiterplatte 31 angeordnet sind.

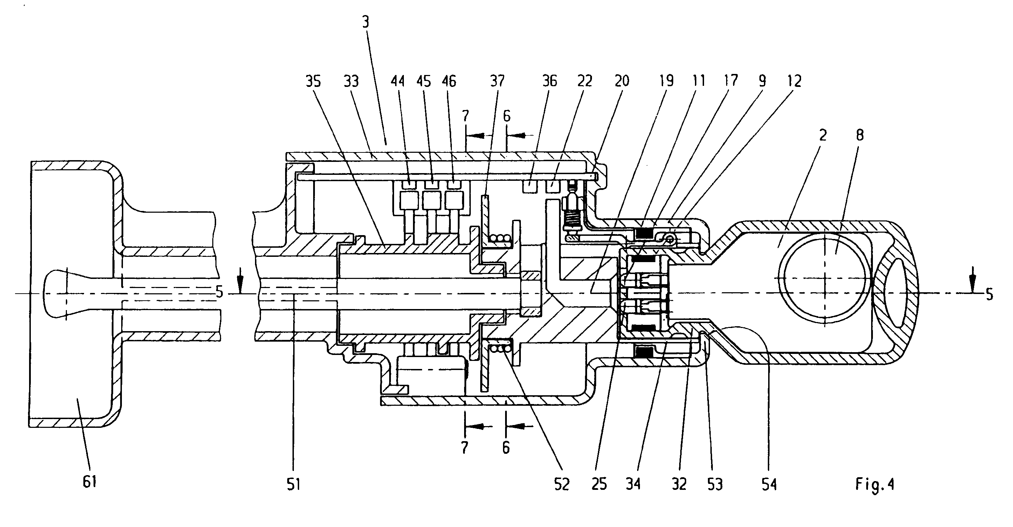

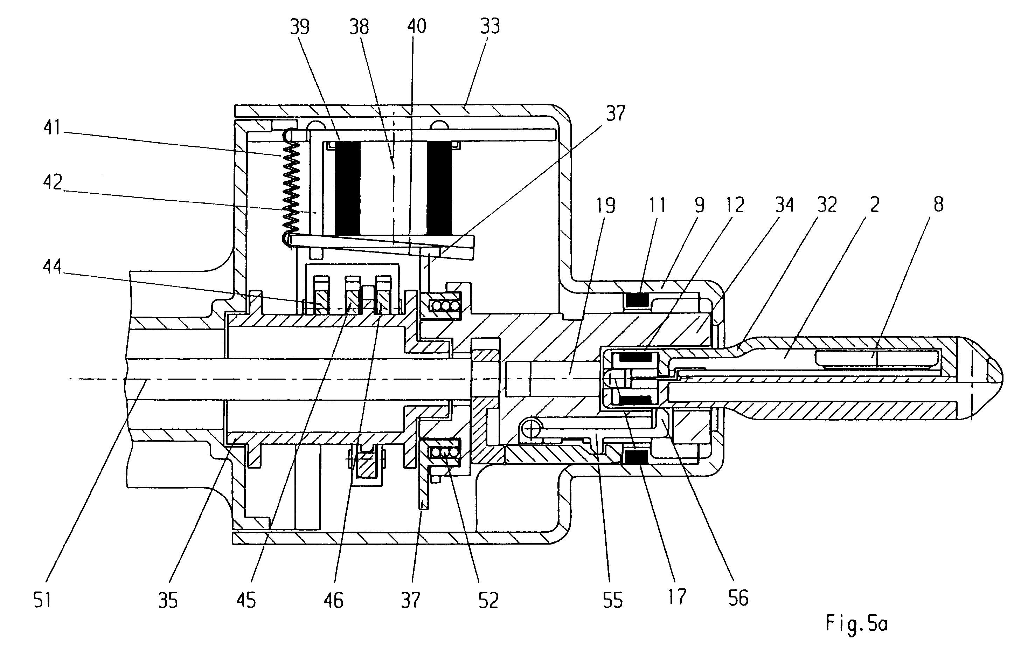

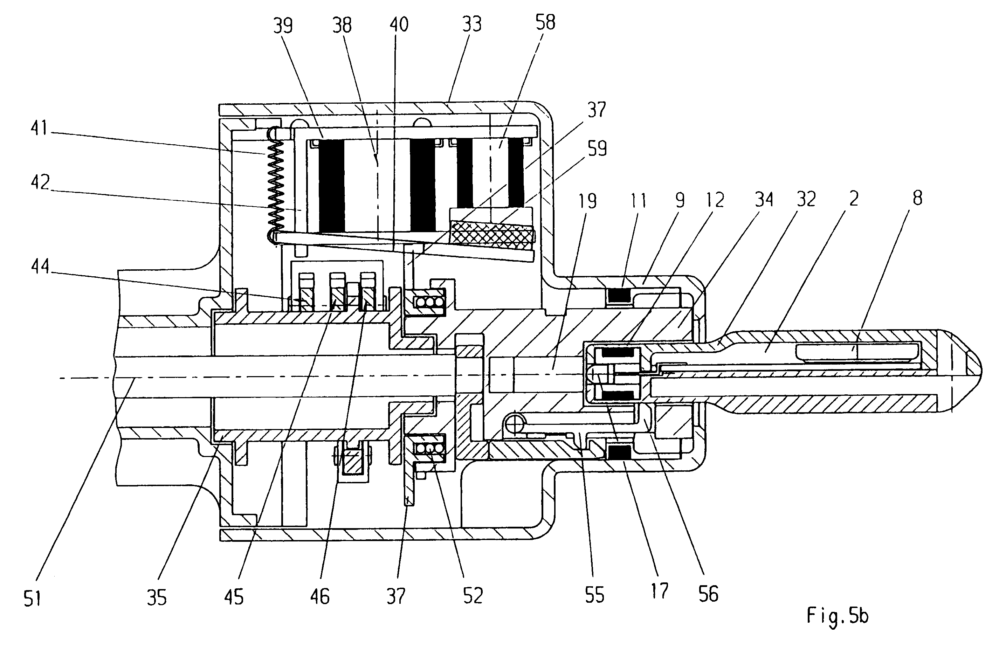

Das Zündstartschloß 3 besteht, wie in Fig. 4 gezeigt ist, aus einem Gehäuse 33, das in einer Aufnahme 9 zur Aufnahme des Steckers 32 am Zündschlüssel 2 endet, wobei die Aufnahme 9 in der Art einer in Fig. 5a,b näher gezeigten Steckdose 34 ausgebildet ist. In der Aufnahme 9 befindet sich auch die Induktionsspule 11. Ist der Zündschlüssel 2 in das Zündstartschloß 3 eingeführt, wie in Fig. 4 dargestellt ist, so ist die elektromagnetische Übertragungsspule 12 im Zündschlüssel 2 von der Induktionsspule 11 umfaßt, womit sich eine besonders effektive induktive Energieübertragung ergibt. Weiter liegen dann die Infrarot-Sendediode 17 und die Infrarot-Empfangsdiode 25 des Zündschlüssels 2 gegenüber einem Ende eines optischen Lichtleiterelements 19 im Gehäuse 33. Das andere Ende des optischen Lichtleiterelements 19 liegt gegenüber einer im Gehäuse 33 befindlichen Leiterplatte 20, auf der die Infrarot-Sendediode 28 und die Infrarot-Empfangsdiode 22 sowie die Elektronik 36 zur Auswertung des ersten Betriebssignals und gegebenenfalls zur Erzeugung des zweiten Betriebssignals angeordnet sind. Das optische Lichtleiterelement 19 dient somit zur Übertragung der optischen Signale zwischen dem Zündschlüssel 2 und dem Zündstartschloß 3.

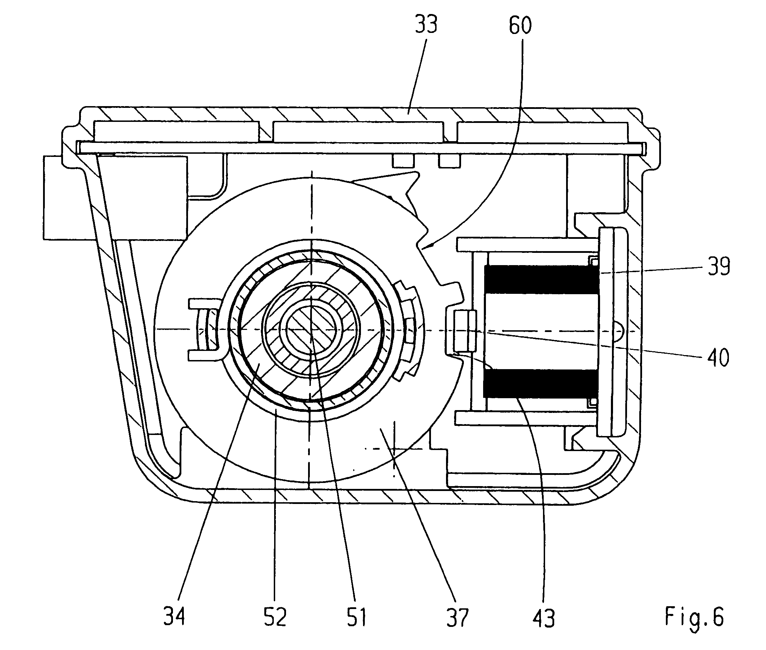

Wie weiter den Fig. 5a und 6 entnommen werden kann, ist die Steckdose 34 im Zündstartschalter 3 drehbar ausgebildet. Mit der Steckdose 34 steht über einen Zwischenring 37, der zur Verringerung der Rastkräfte durch eine Feder 52 mit der Steckdose 34 drehelastisch gekoppelt ist, eine Drehhülse 35 im Zündstartschalter 3 in Wirkverbindung. Mittels einer im Zündstartschloß 3 befindlichen elektromagnetischen Sperreinrichtung 38 ist in der Ausgangsstellung, in der das Betriebsaggregat 5 außer Betrieb ist, der Zwischenring 37 und dadurch die Drehhülse 35 mitsamt der Steckdose 34 verriegelt. Die drehelastische Kopplung am Zwischenring 37 verhindert eine Verkantung zwischen der Steckdose 34 und der elektromagnetischen Sperreinrichtung 38. Die elektromagnetische Sperreinrichtung 38 besteht aus einem Elektromagnet 39 und einer Sperrwippe 40. Gegebenenfalls kann die Sperreinrichtung 38 noch einen im selben Magnetkreis wie der Elektromagnet 39 befindlichen, als Permanentmagnet wirkenden Haftmagneten 58 besitzen, wie in einer weiterren Ausführung in Fig. 5b gezeigt ist. Die Sperrwippe 40 ist als zweiarmiger Hebel ausgebildet und an einer Lagerung 42 drehbar angeordnet. An einem Hebelarm der Sperrwippe 40 greift eine Feder 41 an, so daß der zweite Hebelarm mit der Federkraft in Richtung des Zwischenrings 37 beaufschlagt ist. In Ausgangsstellung der Steckdose 34 greift der zweite Hebelarm der Sperrwippe 40 in eine in Fig. 6 sichtbare Aussparung 43 des Zwischenrings 37 ein, so daß die Steckdose 34 in Ausgangsstellung verriegelt ist.

Der Zündschlüssel 2 wird in die Steckdose 34 in deren Ausgangsstellung eingeführt. Dabei wird über einen Schalter im Zündstartschloß 3 ein Schaltsignal S1 erzeugt, das signalisiert, daß der Zündschlüssel 2 im Zündstartschloß 3 befindlich ist. Bei diesem Schalter kann es sich ebenfalls um den in Fig. 2 bereits gezeigten Schalter 13 handeln. Danach erfolgt eine Übertragung des ersten und gegebenenfalls zweiten Betriebssignals, wie bereits beschrieben, wobei nach deren positiver Auswertung, d.h. falls es sich um den berechtigten Zündschlüssel 2 handelt, und bei Vorliegen des Schaltsignals S1 zur Einleitung der Inbetriebnahme die erste Entriegelung der elektromagnetischen Sperreinrichtung 38 bewirkt wird. Dazu wird der in der Nähe der Lagerung 42 befindliche Elektromagnet 39 erregt, wodurch die Sperrwippe 40 durch den Elektromagneten 39 betätigt wird, indem der zweite Hebelarm der Sperrwippe 40 vom Elektromagneten 39 angezogen wird. Dadurch wird die Sperrwippe 40 gegen die Kraft der Feder 41 außer Eingriff mit der Aussparung 43 gebracht und der Zwischenring 37 mitsamt Steckdose 34 und Drehhülse 35 entriegelt. Ist in der Sperreinrichtung 38 gemäß Fig. 5b ein zusätzlicher Haftmagnet 58 angeordnet, so besitzt der zweite Hebelarm der Sperrwippe 40 einen Permanentmagneten 59. Dadurch wird die Sperrwippe 40 in der entriegelten Stellung durch den Haftmagneten 58 gehalten, auch wenn durch irgendwelche Umstände die Spannungsversorgung ausfallen sollte, was eine Entregung des Elektromagneten 39 nach sich ziehen würde. Es ist auch möglich, lediglich eine Kurzzeiterregung des Elektromagneten 39 zur ersten Entriegelung durchzuführen, da die Sperrwippe 40 in der entriegelten Stellung durch den Haftmagneten 58 gehalten wird.

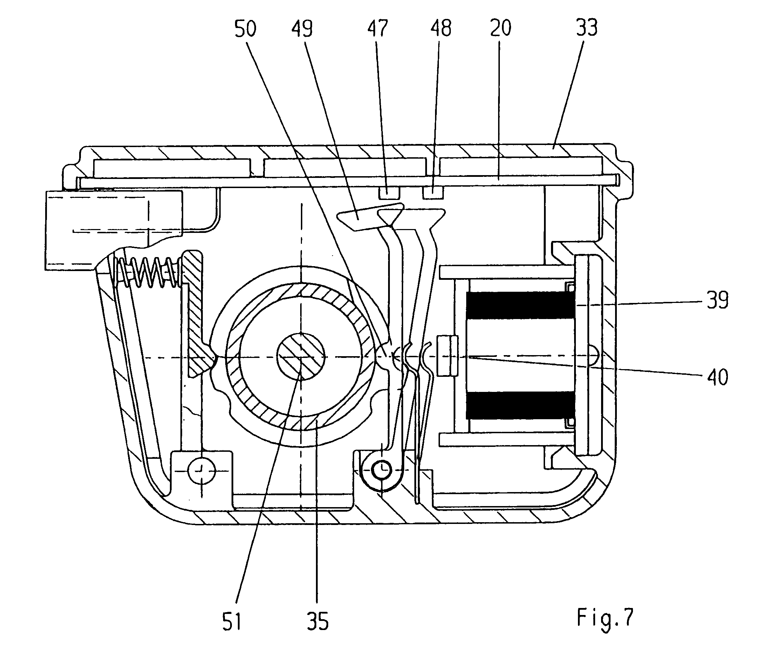

Nachdem die erste Entriegelung der elektromagnetischen Sperreinrichtung 38 bewirkt ist, kann der Benutzer nun den Zündschlüssel 2, wie beim herkömmlichen Zündschloß auch, mitsamt der Steckdose 34, dem Zwischenring 37 und der Drehhülse 35 aus der Ausgangsstellung in eine rotatorische Bewegung versetzen, um in wenigstens eine weitere Stellung zur Betätigung weiterer Schaltvorgänge zu gelangen. Die Schaltvorgänge mit zugehörigen Schaltsignalen werden an bestimmten Drehstellungen der Drehhülse 35 mittels über die Drehhülse 35 betätigten mechanischen, elektronischen, optischen oder optoelektronischen Schaltelementen erzeugt. Im vorliegenden Ausführungsbeispiel sind optoelektronische Schaltelemente 44, 45 und 46 gezeigt, deren Aufbau insbesondere in Fig. 7 näher zu sehen ist. Diese bestehen aus jeweils einem optischen Sendeelement 47 und Empfangselement 48, die auf der Leiterplatte 20 angeordnet sind. Ein Lichtleitelement 49 ist über eine Nockenbetätigung 50 durch die Drehhülse 35 in eine optische Verbindung von Sendeelement 47 und Empfangselement 48 bringbar, wodurch ein entsprechendes Schaltsignal S3, S4, S5 usw. erzeugt wird. Die Schaltsignale S3, S4 der Schaltelemente 44, 45, 46 bewirken die Freigabe der Parkleuchte, bestimmter Teile der Energieversorgung, beispielsweise für das Autoradio, usw.. Eines dieser Schaltsignale, nämlich das Schaltsignal S5 dient letztendlich dazu, daß das Betriebsaggregat 5 in Betrieb genommen wird, also beispielsweise die Wegfahrsperre, deren Elektronik vorzugsweise im Zündstartschloß 3 integriert ist, deaktiviert und der Motor des Kraftfahrzeugs gestartet wird.

Bei gedrehter Steckdose 34 ist eine Entnahme des Zündschlüssels 2 aus der Steckdose 34 des Zündstartschlosses 3 zur Verhinderung einer ungewollten Außerbetriebsetzung des Kraftfahrzeugs nicht möglich. Dazu befinden sich an der Aufnahme 9 Mittel, vorzugsweise mechanische Mittel, beispielsweise in Ausnehmungen 54 am Zündschlüssel 2 eingreifende Rastnasen 53 der Aufnahme 9, wie in Fig. 4 gezeigt ist. Diese Mittel sind in gedrehter Stellung der Steckdose 34 wirksam und verhindern dementsprechend eine Entnahme des Zündschlüssels 2 aus der Aufnahme 9. Umgekehrt sind diese Mittel in der ungedrehten Ausgangsstellung der Steckdose 34 unwirksam, so daß dementsprechend dort eine Freigabe des Zündschlüssels 2 zu dessen Entnahmemöglichkeit erfolgt ist.

Um den Betrieb des Betriebsaggregats 5 zu beenden, wird der Zündschlüssel 2 mitsamt der Steckdose 34, dem Zwischenring 37 und der Drehhülse 35 wieder in Richtung Ausgangsstellung zurückgedreht. Dabei werden die durch die Drehhülse 35 bewirkten Schaltsignale verändert, vorliegend also die Schaltelemente 44, 45, 46 wieder ausgeschaltet. Eines dieser veränderten Schaltsignale wird an das Betriebsaggregat 5 zu dessen Außerbetriebsetzung, beispielsweise zum Abschalten des Motors des Kraftfahrzeugs, weitergeleitet, wenn die Steckdose 34 die Ausgangsstellung wieder erreicht hat. Gleichzeitig wird der Elektromagnet 39 entregt, so daß aufgrund der Kraft der Feder 41 die elektromagnetische Sperreinrichtung 38 wiederum eine Verriegelung der rotatorischen Bewegung des Zündschlüssels 2 bewirkt, indem die Sperrwippe 40 in die Aussparung 43 des Zwischenrings 37 eingreift, wie in Fig. 5a gezeigt ist.

In Weiterbildung der Erfindung wird bei der Rückbewegung des Zündschlüssels 2 eine vor der Ausgangsstellung befindliche Zwischenstellung erreicht, in der eine zweite Verriegelung des Zündschlüssels 2 in eine den Zündschlüssel 2 nicht freigebende Zwischenstellung erfolgt, wie anhand der Fig. 5b und 6 näher erläutert wird. Diese Zwischenstellung besitzt eine in Fig. 6 gezeigte weitere zweite Aussparung 60 am Zwischenring 37, wobei diese zweite Aussparung 60 einen gewissen Abstand zur ersten Aussparung 43 am Zwischenring 37 besitzt. Bei Erreichen der Zwischenstellung wird ein Schaltsignal S2 erzeugt und die Elektronik 36 des Zündstartschlosses 3 überprüft, ob weitere bestimmte Schaltsignale vorliegen. Wenn dies nicht der Fall sein sollte, wird die elektromagnetische Sperreinrichtung 38 verriegelt, indem eine Gegenerregung des Elektromagneten 39 erfolgt, womit die Anziehungskraft des Haftmagneten 58 überwunden wird und die Sperrwippe 40 in die zweite Aussparung 60 eingreift, um die zweite Verriegelung des Zündschlüssels 2 in die den Zündschlüssel 2 nicht freigebende Zwischenstellung zu bewirken. Auch hier genügt wiederum eine Kurzzeitüberregung des Elektromagneten 39, da die Sperrwippe 40 durch die Kraft der Feder 41 in der weiteren Aussparung 60 festgehalten wird.

In dieser Zwischenstellung ist eine Entnahme des Zündschlüssels 2, wie bereits erläutert, nicht möglich. Eine Aufhebung der zweiten Verriegelung zur Bewegung des Zündschlüssels 2 in die diesen freigebende Ausgangsstellung aus der Zwischenstellung erfolgt erst bei Vorliegen wenigstens eines weiteren Schaltsignals. Bei diesem weiteren Schaltsignal handelt es sich um ein Quittierungssignal, das anzeigt, daß gewisse, für die Sicherheit notwendige Funktionen für die Außerbetriebnahme des Betriebsaggregats 5 durchgeführt sind. So kann es sich bei dem weiteren Schaltsignal zur Aufhebung der zweiten Verriegelung für die Bewegung des Zündschlüssels 2 aus der Zwischenstellung um ein Signal für die Betätigung der Handbremse handeln. Bei einem Kraftfahrzeug mit automatischem Getriebe kann es sich noch zusätzlich um ein Signal für die Getriebestellung P (P=Parken) handeln. Liegt dieses weitere Signal vor, so bewirkt die Elektronik 36 eine Erregung des Elektromagneten 39, wodurch die Sperrwippe 40 angezogen wird und außer Eingriff von der zweiten Aussparung 60 gelangt. Dann ist eine weitere Bewegung des Zündschlüssels 2 in die Ausgangsstellung möglich.

In der Ausgangsstellung wird ein Schaltsignal an das Betriebsaggregat 5 zu dessen Außerbetriebsetzung, beispielsweise zum Abschalten des Motors des Kraftfahrzeugs, weitergeleitet. Gleichzeitig wird der Elektromagnet 39 gegenerregt, so daß aufgrund der Kraft der Feder 41 die Sperrwippe 40 in die erste Aussparung 43 eingreift und wiederum eine Verriegelung der Drehbewegung des Zündschlüssels 2 im Zündstartschloß 3 bewirkt. In der Ausgangsstellung ist der Zündschlüssel 2 freigegeben, so daß dessen Entnahme erfolgen kann.

In Weiterbildung der Erfindung kann auch bereits bei der Entriegelung der ersten Verriegelung für die Inbetriebnahme überprüft werden, ob gewisse sicherheitsrelevante Bedingungen erfüllt sind, so daß erst zusätzlich beim Vorliegen eines noch weiteren Schaltsignals als Quittierung für diese Bedingungen und nach positiver Auswertung des Betriebssignals die erste Entriegelung der Bewegung des Zündschlüssels 2 aus der Ausgangsstellung erfolgt. Bei dem noch weiteren Schaltsignal kann es sich um ein Signal für die Bremspedalbetätigung handeln. Hat das Kraftfahrzeug ein automatisches Getriebe, so kann dieses Signal noch weiter die Getriebestellung P oder N (P=Parken / N= Neutral) bedeuten.

Im Zündstartschloß 3 kann auch die Betätigungsmechanik für ein Lenkradschloß integriert sein, wie in Fig. 4 und 5a,b zu sehen ist. Mit der Steckdose 34 steht eine Betätigungswelle 51 in Wirkverbindung, die in ein lediglich schematisch angedeutetes, herkömmliches mechanisches Lenkradschloß 61 eingreift. Bei der Drehung des Zündschlüssels 2 in der Aufnahme 9 wird die Betätigungswelle 51 mitgedreht und dabei das Lenkradschloß 61 entriegelt. Beim Zurückdrehen des Zündschlüssels 2 in die Ausgangsstellung wird die Betätigungswelle 51 ebenfalls zurückgedreht, ein Verriegeln des Lenkradschlosses 61 durch eine Bolzenanordnung 55 jedoch zunächst verhindert. Erst bei Entnahme des Zündschlüssels 2 aus der Aufnahme 9 gibt die Bolzenanordnung 55, die bei in die Aufnahme 9 eingeführtem Zündschlüssel 2 mittels eines Ansatzes 56 vom Zündschlüssel 2 in der Aufnahme 9 gesperrt ist, eine Linearbewegung der Betätigungswelle 51 frei, wodurch das Lenkradschloß 61 wieder verriegelt wird.

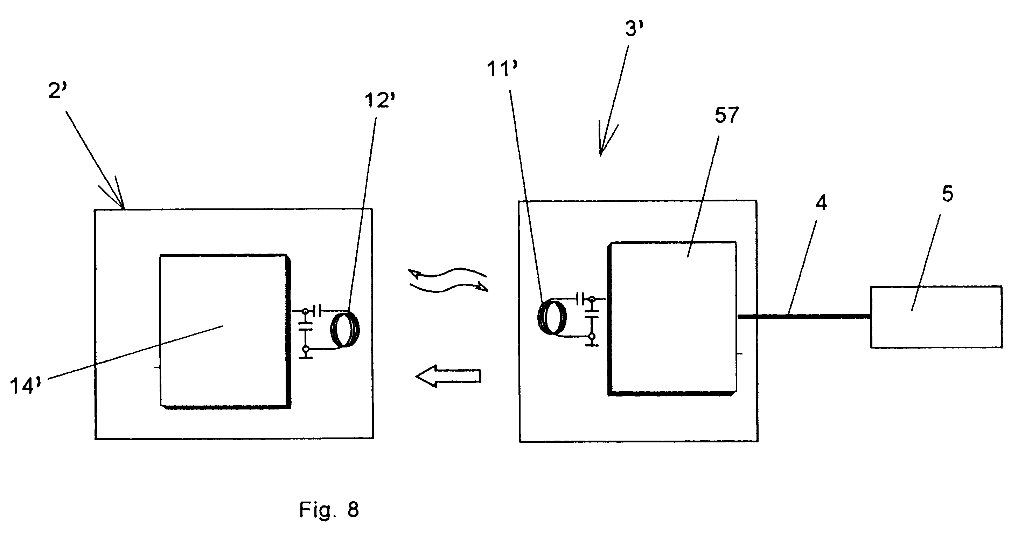

Bei der beschriebenen Ausführungsform der Erfindung erfolgt die Übertragung des codierten Betriebssignals als optisches Signal, beispielsweise Infrarot-Signal. Selbstverständlich können auch andere Signalübertragungsarten durch entsprechende Ausbildung der Betriebssignalsender und -empfänger vorgesehen sein, beispielsweise eine Hf-Signalübertragung, wie sie schematisch in Fig. 8 in einem das Prinzip erläuternden Blockdiagramm gezeigt ist.

Der Zündschlüssel 2' besitzt wiederum eine die Sende- und Empfangs-Bausteine sowie die Codier- bzw. Decodier-Bausteine enthaltende Schlüsselelektronik 14', mit der eine elektromagnetische Übertragungsspule 12' in Verbindung steht. Im Zündstartschalter 3' befindet sich eine dazu korrespondierende Induktionsspule 11', die mit der die Sende- und Empfangs-Bausteine sowie die Codier- und Decodier-Bausteine enthaltenden Elektronik 57 des Zündstartschalters 3' in Verbindung steht. Über Leitungen 4 steht die Elektronik 57 des Zündstartschalters 3' wieder mit dem Betriebsaggregat 5 in Verbindung.

Mittels der elektromagnetischen Übertragungsspule 12' und der Induktionsspule 11' kann wiederum ein codiertes Betriebssignal zwischen dem Zündschlüssel 2' und dem Zündstartschalter 3', nämlich ein elektromagnetisches Signal, auf induktivem Wege ausgetauscht werden. Dazu überträgt die Induktionsspule 11' des Zündstartschlosses 3' Energie auf die Übertragungsspule 12', die zum Betrieb der Schlüsselelektronik 14' dient. Dieser Energie wird ein Signalfeld, gesteuert von der Elektronik 57 überlagert, das gegebenenfalls ein codiertes zweites Betriebssignal enthalten kann und ebenfalls von der elektromagnetischen Übertragungsspule 12' des Zündschlüssels 2' empfangen wird. Die Schlüsselelektronik 14' dämpft einen Teil dieses Signalfelds entsprechend dem zu übertragenden codierten ersten Betriebssignal. Diese Dämpfung des Signalfeldes wird von der Elektronik 57 des Zündstartschlosses 3' registriert und daraus das übertragene codierte erste Betriebssignal ermittelt und entschlüsselt. Nach positiver Auswertung des Betriebssignals wird wiederum die Inbetriebnahme des Betriebsaggregats 5 auf die oben beschriebene Weise durchgeführt.

Die Erfindung ist nicht auf die beschriebenen und dargestellten Ausführungsbeispiele beschränkt. Sie umfaßt vielmehr auch alle fachmännischen Weiterbildungen im Rahmen des Erfindungsgedankens. Zwar wird eine Ausbildung des Zündstartschlosses für eine rotatorische Bewegung des Zündschlüssels, wie oben beschrieben, bevorzugt, da der Bedienungablauf für den Benutzer dann im wesentlichen auf herkömmliche Weise erfolgt. Genausogut kann jedoch eine Ausgestaltung so erfolgen, daß der Zündschlüssel in der Aufnahme des Zündstartschlosses linear translatorisch oder kombiniert linear/rotatorisch bewegbar ist, um die Inbetriebnahme des Betriebsaggregats durchzuführen.

## Patentansprüche

1. Elektronisches Zündstartschloßsystem an einem Kraftfahrzeug mit einem elektronischen Zündschlüssel (2) und einem elektronischen Zündstartschloß (3) zur Betätigung eines zugehörigen Betriebsaggregats (5), wie Motorelektronik, Wegfahrsperre o. dgl., wobei der Zündschlüssel (2) mit dem Zündstartschloß (3) wenigstens ein codiertes Betriebssignal austauscht und wobei Mittel zur Entschlüsselung des codierten Betriebssignals vorgesehen sind zur Inbetriebnahme des Betriebsaggregats (5), wobei eine positive Auswertung des Betriebssignals eine erste Entriegelung der Bewegung des Zündschlüssels (2), mittels einer elektromagnetischen Sperreinrichtung (38) bewirkt, wodurch der elektronische Zündschlüssel (2) aus einer Ausgangsstellung in eine rotatorische Bewegung versetzbar ist, dadurch gekennzeichnet, daß diese Bewegung des Zündschlüssels (2) auf im Zündstartschloß (3) befindliche mechanische, elektronische, optische, optoelektronische o. dgl. Schaltelemente (44, 45, 46) über eine Drehhülse (35) einwirkt, daß die rotatorische Bewegung des Zündschlüssels (2) auf eine im Zündstartschloß (3) drehbar angeordnete Steckdose (34) einwirkt, wobei die Steckdose (34) über einen drehelastisch gekoppelten Zwischenring (37) mit der Drehhülse (35) zur Einwirkung auf die im Zündstartschloß (3) befindlichen Schaltelemente (44, 45, 46) in Wirkverbindung steht, und daß die elektromagnetische Sperreinrichtung (38) aus einer Sperrwippe (40) und einem Elektromagneten (39) zur Betätigung der Sperrwippe (40) besteht, wobei die Sperrwippe (40) in Ausgangsstellung zur ersten Verriegelung der Drehhülse (35) in eine erste Aussparung (43) am Zwischenring (37), gegebenenfalls in der Zwischenstellung für die zweite Verriegelung der Drehhülse (35) in eine weitere zweite Aussparung (60), die beabstandet zur ersten Aussparung (43) am Zwischenring (37) angeordnet ist, insbesondere unter Einwirkung der Kraft einer Feder (41), eingreift und zur Entriegelung der Drehhülse (35) durch Erregung des Elektromagneten (39) außer Eingriff mit der Aussparung (43) bringbar ist.

2. Elektronisches Zündstartschloßsystem nach Anspruch 1, dadurch gekennzeichnet, daß bei einer Rückbewegung des Zündschlüssels (2) in Richtung Ausgangsstellung zur Außerbetriebnahme des Betriebsaggregats (5) eine zweite Verriegelung des Zündschlüssels (2) in eine den Zündschlüssel (2) nicht freigebende Zwischenstellung erfolgt, wobei die Aufhebung der zweiten Verriegelung zur Bewegung des Zündschlüssels (2) in die diesen freigebende Ausgangsstellung aus der Zwischenstellung erst bei Vorliegen wenigstens eines weiteren Schaltsignals erfolgt und wobei vorzugsweise sowohl die erste Verriegelung der Bewegung des Zündschlüssels (2) in der Ausgangsstellung als auch die zweite Verriegelung in der Zwischenstellung durch die im Zündstartschloß (3) befindliche elektromagnetische Sperreinrichtung (38) bewirkbar ist.

3. Elektronisches Zündstartschloßsystem nach Anspruch 2, dadurch gekennzeichnet, daß es sich bei dem weiteren Schaltsignal zur Aufhebung der zweiten Verriegelung für die Bewegung des Zündschlüssels (2) aus der Zwischenstellung um ein Signal für die Betätigung der Handbremse und bei einem Kraftfahrzeug mit automatischem Getriebe um ein gegebenenfalls zusätzliches Signal für die Getriebestellung P (P=Parken) handelt.

4. Elektronisches Zündstartschloßsystem nach Anspruch 1, 2 oder 3, dadurch gekennzeichnet, daß die erste Entriegelung der Bewegung des Zündschlüssels (2) aus der Ausgangsstellung nach positiver Auswertung des Betriebssignals erst erfolgt, wenn zusätzlich ein noch weiteres Schaltsignal vorliegt, wobei es sich insbesondere bei dem noch weiteren Schaltsignal um ein Signal für die Bremspedalbetätigung und bei einem Kraftfahrzeug mit automatischem Getriebe um ein gegebenenfalls zusätzliches Signal für die Getriebestellung P oder N (P=Parken / N=Neutral) handelt.

5. Elektronisches Zündstartschloßsystem nach einem der Ansprüche 1 bis 4, dadurch gekennzeichnet, daß das Zündstartschloß (3) eine Aufnahme (9) für den Zündschlüssel (2) besitzt, wobei an der Aufnahme (9) Mittel, vorzugsweise mechanische Mittel, wie Rastnasen (53) am Zündstartschloß (3) und Ausnehmungen (54) am Zündschlüssel (2), angeordnet sind, die eine Freigabe des Zündschlüssels (2) aus der Aufnahme (9) lediglich in der Ausgangsstellung des Zündschlüssels (2) gestatten.

6. Elektronisches Zündstartschloßsystem nach Anspruch 1, dadurch gekennzeichnet, daß die elektromagnetische Sperreinrichtung (38) einen zusätzlichen, mit dem Elektromagneten (39) vorzugsweise in einem gemeinsamen Magnetkreis befindlichen Haftmagneten (58) besitzt, der mit seiner Permanenterregung auf die Sperrwippe (40) derart einwirkt, daß auch bei Ausfall des Elektromagneten (39) die Sperrwippe (40) in der entriegelten Stellung festhaltbar ist, und wobei vorzugsweise zur Entriegelung der elektromagnetischen Sperreinrichtung (38) in der Ausgangsstellung und gegebenenfalls in der Zwischenstellung eine Kurzzeitüberregung des Elektromagneten (39) und zur Verriegelung der elektromagnetischen Sperreinrichtung (38) in der Ausgangsstellung und gegebenenfalls in der Zwischenstellung eine die Anziehungskraft des Haftmagneten (58) überwindende Gegenerregung des Elektromagneten (39) vorgenommen wird.

7. Elektronisches Zündstartschloßsystem nach einem der Ansprüche 1 bis 6, dadurch gekennzeichnet, daß im Zündstartschloß (3, 3') und im Zündschlüssel (2, 2') Mittel zur induktiven, optischen o. dgl. Energieübertragung vom Zündstartschloß (3, 3') auf den Zündschlüssel (2, 2') für den Betrieb des Zündschlüssels (2, 2') angeordnet sind, wobei insbesondere zur optischen Energieübertragung im Zündstartschloß (3) ein Leuchtmittel, beispielsweise eine Leuchtdiode, und im Zündschlüssel (2) ein optoelektrisches Wandlerelement, beispielsweise ein Photodiode bzw. ein Phototransistor, befindlich sind oder zur induktiven Energieübertragung im Zündstartschloß (3, 3') eine Induktionsspule (11, 11') und im Zündschlüssel (2, 2') eine dazu korrespondierende elektromagnetische Übertragungsspule (12, 12') befindlich sind, wobei diese Mittel bei in das Zündstartschloß (3, 3') eingeführtem Zündschlüssel (2, 2') vorzugsweise einschaltbar zur Energieübertragung zusammenwirken.

8. Elektronisches Zündstartschloßsystem nach Anspruch 7, dadurch gekennzeichnet, daß das Betriebssignal als elektromagnetisches Signal, insbesondere Hf-Signal, vorzugsweise bidirektional zwischen Zündschlüssel (2') und Zündstartschloß (3') über die Induktionsspule (11') und elektromagnetische Übertragungsspule (12') austauschbar ist, wobei der übertragenen Energie ein Signalfeld überlagert ist, das gegebenenfalls ein Betriebssignal enthalten kann und von dem ein Teil entsprechend dem zu übertragenden Betriebssignal vom Zündschlüssel (2') gedämpft wird.

9. Elektronisches Zündstartschloßsystem nach einem der Ansprüche 1 bis 7, dadurch gekennzeichnet, daß im Zündschlüssel (2) und im Zündstartschloß (3) optische Sender (17, 28) und Empfänger (22, 25) angeordnet sind, so daß das Betriebssignal als optisches Signal, insbesondere Infrarot-Signal, vorzugsweise bidirektional zwischen Zündschlüssel (2) und Zündstartschloß (3) austauschbar ist und daß vorzugsweise die optischen Sender (28) und Empfänger (22) im Zündstartschloß (3) auf einer Leiterplatte (20) angeordnet sind, wobei ein der Übertragung der optischen Signale dienendes optisches Lichtleiterelement (19) von der Aufnahme (9) des Zündschlüssels (2) im Zündstartschloß (3) zum optischen Sender (28) und Empfänger (22) auf der Leiterplatte (20) führt.

10. Elektronisches Zündstartschloßsystem nach einem der Ansprüche 1 bis 9, dadurch gekennzeichnet, daß im Zündstartschloß (3) eine Elektronik (36) zur Auswertung des Betriebssignals sowie gegebenenfalls der weiteren Schaltsignale und vorzugsweise weiter die Betätigungsmechanik (51, 55, 56) für ein Lenkradschloß (61) integriert sind.

## Claims

1. An electronic ignition locking device for a motor vehicle, having an electronic ignition key (2) and an electronic ignition lock (3) for activation of an associated operating assembly (5), such, for example, as engine electronics, immobiliser or similar component, in which the ignition key (2) exchanges at least one encoded operating signal with the ignition lock (3), and in which means are provided for decoding the coded operating signal to activate the operating assembly (5), by which a positive evaluation of the operating signal activates a primary unlocking of the movement of the ignition key (2) by means of an electro-magnetic locking device (38), whereby the starting position of the electronic ignition key (2) may be changed into a rotating movement via a rotary housing (35), and whereby this movement of the ignition key (2) acts on the mechanical, electronic, optical, optico-electronic or similar switch elements (44, 45, 46) that are situated in the ignition-lock (3), so that the rotational movement of the ignition key (2) acts on a socket (34) that is rotatably located in the ignition lock (3), and so that the socket (34) becomes situated via an intermediate , elastically rotatable, coupling ring (37) in the operating position in relation to the rotary housing (35) for activation of the switch elements (44, 45, 46) within the ignition lock (3), and in which the electro-magnetic locking device (38) comprises a locking rocker (40) and an electro-magnet (39) for activation of the locking rocker (40), whereby the locking rocker (40) can be brought from the starting position into the first locking of the rotary housing (35) in a first recess (43) on the coupling ring (37), or, if required, into the intermediary position for the second locking of the rotary housing (35) in a further, second recess (60) that is separated from the first recess (43) on the coupling ring (37), especially under the force of the pressure of a spring (41), and, for the unlocking of the rotary housing (35), can be disengaged from the recess (43) by activation of the electromagnet (39).

2. An electronic ignition locking device according to Claim 1, in which by reversal of the ignition key (2) in the direction of the starting position, to inactivate the operating assembly (5), a second locking of the ignition key (2) in one of the intermediary positions in which the ignition key (2) is not releasable, is achieved, whereby the release of the second locking to move the ignition key (2) out of the intermediary position into the non-releasable starting position can only be achieved when at least one additional switch signal is provided and whereby, preferably, the first locking of the movement of the ignition key (2) is activated in the starting position as well as the second locking being activated in the intermediary position by means of the electro-magnetic locking device situated in the ignition lock.

3. An electronic ignition locking device according to Claim 2, in which the additional switch signals for the release of the second locking to move the ignition key (2) out of the intermediary position are a signal for operation of the hand-brake and, in the case of a vehicle with automatic transmission, a possibly additional signal for the gear position P or N (P = Parking; N = Neutral).

4. An electronic ignition locking device according to Claim 1, 2 or 3, in which the first unlocking of the movement of the ignition key (2) out of the starting position, following positive evaluation of the operating signal, is only successful if, in addition, yet another switch signal is available, which, especially in the case of an additional switch signal, relates to a signal for activation of the brake pedal and, in the case of a vehicle with automatic transmission, relates to a possibly additional signal for the gear position P or N (P = Parking; N = Neutral).

5. An electronic ignition locking device according to any of the Claims 1 to 4, in which the ignition lock (3) has a receptacle (9) for the ignition key (2), and in which the receptacle (9) is provided with means, preferably mechanical means such, for example, as projections (53) on the ignition lock (3) and recesses (54) on the ignition key (2), which allow the release of the ignition key (2) from the receptacle (9) only when the ignition key (2).is in the starting position.

6. An electronic ignition locking device according to Claim 1, in which the electro-magnetic locking device (38) is provided with an additional clamping magnet (58) that, together with the electro-magnet (39), is preferably situated within a common magnetic field, that, in its state of permanent stimulation, acts upon the locking rocker (40) in such a manner that, even if the electro-magnet (39) fails, the locking rocker (40) is firmly held in its unlocked position, and whereby, preferably for unlocking the electro-magnetic locking device (38) in the starting position and, in certain circumstances, in the intermediate position, a brief over-stimulus of the electro-magnets (39) is undertaken, and for locking the electro-magnetic locking device (38) in the starting position and under certain circumstances in the intermediate position, a counter-stimulus of the electro-magnets (39) is undertaken that overcomes the attraction force of the clamping magnet (58) .

7. An electronic ignition locking device according to any of the Claims 1 to 6, in which means are provided on the ignition lock (3, 3') and on the ignition key (2, 2') for the inductive, optical or other method of transmission of energy from the ignition lock (3, 3') onto the ignition key (2, 2') for operation of the ignition key (2, 2'), whereby, especially for the optical transmission of energy in the ignition lock (3), a light source such, for example, as a light-emitting diode is provided, and in the ignition key (2) an opto-electric transformer element such, for example, as a photo-diode or a photo-transistor is provided, or, for the inductive transmission of energy in the ignition lock (3. 3'), an induction coil (11, 11'), and, in the ignition key, a thereto corresponding electro-magnetic transmission coil (12, 12') is provided, such that these means can be switched on to preferably act together on insertion of the ignition key (2, 2') into the ignition lock (3, 3'), for transmission of energy.

8. An electronic ignition locking device according to Claim 7, in which the operating signal as an electro-magnetic signal, especially an Hf-signal that is preferably bi-directional, is exchangeable between the ignition key (2') and the ignition lock (3') via the induction coil (11') and the electro-magnetic transmission coil (12'), whereby the transmitted energy is superimposed on a signal field, that may, if necessary, comprise an operating signal, of which a part, corresponding to the transmitting operating signal from the ignition key (2'), is attenuated.

9. An electronic ignition locking device according to any of the Claims 1 to 7, in which optical transmitters (17, 28) and receivers (22, 25) are provided in the ignition key (2) and in the ignition lock (3), whereby the operating signal as an optical, especially an infra-red signal, is exchangeable, preferably bi-directionally, between the ignition key (2) and the ignition lock (3), and in which the optical transmitter (28) and the receiver (22) in the ignition lock (3) are preferably situated on a circuit board (20), whereby one of the optical light-guiding elements (19) that serves to transmit the light signal, joins the receptacle (9) of the ignition key (2) in the ignition lock (3) to the optical transmitter (28) and the receiver (22) on the circuit board (20).

10. An electronic ignition locking device according to any of the Claims 1 to 9, in which an electronic pack (36) is incorporated into the ignition lock (3), for evaluation of the operating signal and, if necessary, also of the additional switch signals, and, preferably, also the activating mechanism (51, 55, 56) for the steering wheel lock (61).

## Revendications

1. Système de verrouillage d'allumage électronique sur un véhicule automobile, comportant une clé d'allumage électronique (2) et un verrou d'allumage électronique (3) pour actionner une unité opératoire correspondante (5), comme l'électronique du moteur, le verrou de démarrage ou analogue, la clé d'allumage (2) échangeant avec le verrou d'allumage (3) au moins un signal de fonctionnement codé, et des moyens étant prévus pour décoder le signal de fonctionnement codé pour la mise en route de l'unité opératoire (5), une exploitation positive du signal de fonctionnement permettant un premier déverrouillage du mouvement de la clé d'allumage (2), au moyen d'un dispositif d'arrêt électromagnétique (38), grâce à quoi la clé électronique (2) peut être déplacée à partir d'une position initiale en un mouvement de rotation,
caractérisé en ce que ce mouvement de la clé d'allumage (2) agit sur des éléments de commutation mécaniques, électroniques, optiques, optoélectroniques ou analogues (44,45,46) se trouvant dans le verrou d'allumage (3), par l'intermédiaire d'une douille rotative (35), en ce que le mouvement rotatif de la clé d'allumage (2) agit sur une fiche femelle (34) agencée de façon rotative dans le verrou d'allumage (3), la fiche femelle (34) étant en liaison active, au moyen d'une bague intermédiaire (37) couplée de façon élastique à torsion, avec la douille rotative (35) pour agir sur les éléments de commutation (44, 45, 46) se trouvant dans le verrou d'allumage (3), et en ce que le dispositif d'arrêt électromagnétique (38) est constitué d'une bascule d'arrêt (40) et d'un électroaimant (39) pour actionner la bascule d'arrêt (40), la bascule d'arrêt (40) s'engageant dans la position initiale pour le premier verrouillage de la douille rotative (35) dans un premier évidement (43) sur la bague intermédiaire (37), le cas échéant, dans la position intermédiaire pour le second verrouillage de la douille rotative (35) dans un autre second évidement (60), qui est agencé de façon écartée par rapport au premier évidement (43) sur la bague intermédiaire (37), en particulier sous l'effet de la force d'un ressort (41), et, pour le déverrouillage de la douille rotative (35), par excitation de l'électroaimant (39), pouvant être amenée hors d'engagement avec l'évidement (43).

2. Système de verrouillage d'allumage électronique selon la revendication 1,
caractérisé en ce que, lors d'un mouvement en arrière de la clé d'allumage (2) en direction de la position initiale pour la mise hors service de l'unité opératoire (5), un second verrouillage de la clé d'allumage (2) a lieu dans une position intermédiaire ne libérant pas la clé d'allumage (2), la neutralisation du second verrouillage pour déplacer la clé d'allumage (2) dans la position initiale libérant celle-ci à partir de la position intermédiaire n'ayant lieu que lorsqu'il existe au moins un autre signal de commutation et, avantageusement, aussi bien le premier verrouillage du déplacement de la clé d'allumage (2) dans la position initiale qu'également le second verrouillage dans la position intermédiaire pouvant être effectués par le dispositif d'arrêt (38) électromagnétique se trouvant dans le verrou d'allumage (3).

3. Système de verrouillage d'allumage électronique selon la revendication 2,
caractérisé en ce que, concernant l'autre signal de commutation pour neutraliser le second verrouillage pour le déplacement de la clé d'allumage (2) à partir de la position intermédiaire, il s'agit d'un signal pour l'actionnement du frein à main et, pour un véhicule automobile à changement de vitesses automatique, d'un signal le cas échéant supplémentaire pour la position du changement de vitesses P (P = stationnement).

4. Système de verrouillage d'allumage électronique selon la revendication 1, 2 ou 3,
caractérisé en ce que le premier déverrouillage du déplacement de la clé d'allumage (2) à partir de la position initiale n'a lieu, après exploitation positive du signal de fonctionnement, que lorsqu'il existe, de façon supplémentaire, encore un autre signal de commutation, cet autre signal de commutation étant en particulier un signal pour l'actionnement de la pédale de frein et, pour un véhicule automobile à changement de vitesses automatique, un signal le cas échéant supplémentaire pour la position de changement de vitesses P ou N (P = stationnement/N = neutre).

5. Système de verrouillage d'allumage électronique selon une des revendications 1 à 4,
caractérisé en ce que le verrou d'allumage (3) possède un récepteur (9) pour la clé d'allumage (2), des moyens, avantageusement des moyens mécaniques, comme des ergots d'encliquetage (53) sur le verrou d'allumage (3) et des évidements (54) sur la clé d'allumage (2), étant agencés sur le récepteur (9), lesquels permettent une libération de la clé d'allumage (2) du récepteur (9) uniquement dans la position initiale de la clé d'allumage (2).

6. Système de verrouillage d'allumage électronique selon la revendication 1,
caractérisé en ce que le dispositif d'arrêt électromagnétique (38) possède un aimant adhérent supplémentaire (58) se trouvant avec l'électroaimant (39) avantageusement dans un circuit magnétique commun, qui agit avec son excitation permanente sur la bascule d'arrêt (40), de sorte que, également lors d'une défaillance de l'électroaimant (39), la bascule (40) peut être maintenue dans la position déverrouillée et, avantageusement, pour déverrouiller le dispositif d'arrêt électromagnétique (38) dans la position initiale, et, le cas échéant, dans la position intermédiaire, une surexcitation temporaire de l'électroaimant (39) et, pour le verrouillage du dispositif d'arrêt électromagnétique (38) dans la position initiale et, le cas échéant, dans la position intermédiaire, une contre-excitation, surmontant la force d'attraction de l'aimant adhérent (58), de l'électroaimant (39) étant effectuées.

7. Système de verrouillage d'allumage électronique selon une des revendications 1 à 6,
caractérisé en ce que, dans le verrou d'allumage (3, 3') et dans la clé d'allumage (2, 2'), sont agencés des moyens pour le transfert d'énergie inductif, optique ou analogue du verrou d'allumage (3, 3') à la clé d'allumage (2, 2') pour l'actionnement de la clé d'allumage (2, 2'), en particulier pour le transfert d'énergie optique dans le verrou d'allumage (3), un moyen luminescent, par exemple une diode électroluminescente et, dans la clé d'allumage (2), un élément convertisseur optoélectrique, par exemple une photodiode ou un phototransistor, étant prévus, ou pour le transfert d'énergie inductif dans le verrou d'allumage (3, 3'), une bobine d'induction (11, 11') et, dans la clé d'allumage (2, 2'), une bobine de transfert électromagnétique correspondant à celle-ci (12, 12') étant prévues, ces moyens coopérant lorsque la clé d'allumage (2, 2') est introduite dans le verrou d'allumage (3, 3') avantageusement en pouvant être mis en circuit pour le transfert d'énergie.

8. Système de verrouillage d'allumage électronique selon la revendication 7,
caractérisé en ce que le signal de fonctionnement comme signal électromagnétique, en particulier signal H.F., peut être échangé avantageusement de façon bidirectionnelle entre la clé d'allumage (2') et le verrou d'allumage (3') par l'intermédiaire de la bobine d'induction (11') et de la bobine de transfert électromagnétique (12'), l'énergie transmise étant superposée à un champ de signal qui, le cas échéant, peut contenir un signal de fonctionnement et être amorti par la partie correspondant au signal de fonctionnement à transférer de la clé d'allumage (2').

9. Système de verrouillage d'allumage électronique selon une des revendications 1 à 7,
caractérisé en ce que des récepteurs (22, 25) et émetteurs (17, 28) optiques sont agencés dans la clé d'allumage (2) et dans le verrou d'allumage (3), de sorte que le signal de fonctionnement comme signal optique, en particulier comme signal infrarouge, peut être échangé avantageusement de façon bidirectionnelle entre la clé d'allumage (2) et le verrou d'allumage (3), et en ce que, avantageusement, les récepteurs (22) et émetteurs (28) optiques dans le verrou d'allumage (3) sont agencés sur une plaquette imprimée (20), un élément de guidage de lumière optique (19) servant à transférer les signaux optiques menant du récepteur (9) de la clé d'allumage (2) dans le verrou d'allumage (3) vers les récepteurs (22) et émetteurs (28) optiques sur la plaquette imprimée (20).

10. Système de verrouillage d'allumage électronique selon une des revendications 1 à 9,
caractérisé en ce que, dans le verrou d'allumage (3), sont intégrées une électronique (36) pour exploiter le signal de fonctionnement ainsi que, le cas échéant, les autres signaux de commutation et, encore avantageusement, la mécanique d'actionnement (51, 55, 56) pour un anti-vol sur la direction (61).
